# EUROPÄISCHE PATENTSCHRIFT

(11) **EP 3 815 882 B1**
(45) Veröffentlichungstag und Bekanntmachung des Hinweises auf die Patenterteilung: **10.01.2024**
(21) Anmeldenummer: 19206654.6
(22) Anmeldetag: 31.10.2019
(51) Int. Cl.: B29C 65/06, B29C 37/04, F16B 5/01

(54) **WERKZEUG UND VERFAHREN ZUM SETZEN EINES SETZELEMENTS**
TOOL AND METHOD FOR SETTING A SETTING ELEMENT
OUTIL ET PROCÉDÉ DE POSE D'UN ÉLÉMENT

(43) Veröffentlichungstag der Anmeldung: 05.05.2021
(73) Patentinhaber: Weber Schraubautomaten GmbH, 82515 Wolfratshausen (DE)
(72) Erfinder: Stützer, Robert, 81475 München (DE); Schürch, Simon, 83674 Gaißach (DE); Böck, Sebastian, 82541 Holzhausen (DE)
(74) Vertreter: Manitz Finsterwald Patent- und Rechtsanwaltspartnerschaft mbB

(56) Entgegenhaltungen:
- EP-A1- 2 732 956
- WO-A1-2015/120900

## Beschreibung

Die Erfindung betrifft ein Werkzeug und ein Verfahren zum Setzen eines Setzelements in einem Bauteil unter Erzeugung einer Reibschweißverbindung zwischen dem Setzelement und dem Bauteil.

Solche Werkzeuge und Verfahren sind grundsätzlich bekannt und werden u.a. dazu verwendet, sogenannte Kunststoffdome in Sandwichstrukturen mit einem Waben- oder Schaumkern und Deckschichten aus faserverstärkten Kunststoffen einzubringen.

Zum Einbringen eines Setzelements, z.B. eines Kunststoffdoms, wird eine Antriebswelle, deren Stirnfläche mit einer Rückseite des Setzelements in Kontakt steht, von einer Rotationsvorschubeinheit in Rotation versetzt. Zusätzlich wird das sich drehende Setzelement von der Rotationsvorschubeinheit mit einer in Richtung der Drehachse wirkenden Axialkraft auf das Bauteil, z.B. auf die Deckschicht aus faserverstärktem Kunststoff, gedrückt, sodass sich das Setzelement und die Deckschicht durch Reibung erwärmen. Sobald die Deckschicht durchdrungen ist, kann sich das Setzelement durch die Deckschicht hindurch in den Kern der Sandwichstruktur hineinbohren. Wenn die Deckschicht und der Kern wieder erkalten, entsteht eine Reibschweißverbindung zwischen dem Setzelement und dem Bauteil.

Während des Setzprozesses verdrängt das Setzelement aufgeschmolzenes Material des Bauteils und des Setzelements. Das verdrängte Material bildet einen das Setzelement umgebenden Wulst an der Oberfläche des Bauteils, wodurch das Bauteil seine ursprüngliche Oberflächenform im Bereich des Wulstes verliert. Dies ist insbesondere dann von Nachteil, wenn eine glatte Bauteiloberfläche gewünscht ist. Eine glatte Bauteiloberfläche kann beispielsweise vorteilhaft sein, wenn das Bauteil mit einem anderen Bauteil verbunden werden soll und die Bauteile flächig aneinander anliegen sollen.

Die Dokumente WO 2015/120900 A1 und EP 2 732 956 A1 offenbaren ein Werkzeug mit den Merkmalen des Oberbegriffs des Anspruchs 1. Die offenbarten Werkzeuge weisen Schneidmittel auf, die dazu dienen, den das Setzelement umgebenden Wulst abzuschneiden oder abzufräsen.

Es ist eine Aufgabe der vorliegenden Erfindung, ein Werkzeug und ein Verfahren bereitzustellen, welche es auf einfache Weise ermöglichen, einen Setzprozess durchzuführen und dabei eine im Wesentlichen glatte Bauteiloberfläche zu erhalten, ohne die Bauteiloberfläche zu beschädigen.

Die Aufgabe wird gelöst durch ein Werkzeug mit den Merkmalen des Anspruchs 1.

Das Sollbruchstellenerzeugungselement ist dazu ausgebildet und eingerichtet, eine Sollbruchstelle in dem durch den Setzprozess entstehenden Wulst zu erzeugen, um diesen anschließend einfach entfernen zu können.

Vorteilhafte Ausbildungen der Erfindung sind den Unteransprüchen, der Beschreibung und der Zeichnung zu entnehmen.

Gemäß einer Ausführungsform bildet eine Ableitfläche des Sollbruchstellenerzeugungselements zumindest abschnittsweise eine Kante. Diese ist vorzugsweise dazu ausgebildet, eine ringförmige Sollbruchstelle in einem Wulst zu erzeugen, welcher beim Setzen des Setzelements um das Setzelement herum entsteht. Dabei kann das Sollbruchstellenerzeugungselement dazu ausgebildet und eingerichtet sein, in die noch nicht wiedererstarrte Schmelze einzutauchen und dabei eine Sollbruchstelle zu erzeugen.

Vorzugsweise ist das Sollbruchstellenerzeugungselement axial beweglich an der Antriebswelle angeordnet. Speziell kann ein axialer Abstand zwischen der Kante des Sollbruchstellenerzeugungselements und einer Stirnfläche der Antriebswelle, mit der die Antriebswelle mit einer Rückseite des Setzelements in Kontakt steht, veränderbar sein. Hierdurch kann verhindert werden, dass das Sollbruchstellenerzeugungselement beim Setzprozess den Wulst vollständig durchtrennt und so auf die Deckschicht auftrifft.

Gemäß einer Ausführungsform ist das Sollbruchstellenerzeugungselement entgegen einer Federkraft in Richtung eines proximalen Endes der Antriebswelle beweglich. Vorzugsweise ist ein Federelement zwischen das Sollbruchstellenerzeugungselement und einen Abschnitt der Antriebswelle geschaltet, welches durch eine Bewegung des Sollbruchstellenerzeugungselements in Richtung eines proximalen Endes der Antriebswelle aufladbar ist. Als proximales Ende der Antriebswelle wird das antriebsseitige Ende der Antriebswelle angesehen, d.h. dasjenige Ende der Antriebswelle, welches von einer Aufnahme für das Setzelement beabstandet ist.

Um das Werkzeug auf unterschiedliche Materialien anpassen zu können, kann die Federkraft einstellbar sein. Insbesondere können Einstellmittel vorgesehen sein, um eine Rückstellkraft des Federelements verändern bzw. einstellen zu können. Beispielsweise kann das Federelement durch die Einstellmittel vorgespannt werden, sodass die Rückstellkraft des Federelements erhöht wird.

Gemäß einer Ausführungsform kann das Sollbruchstellenerzeugungselement drehfest mit der Antriebswelle gekoppelt sein. Hierdurch kann die Drehbewegung der Antriebswelle vollständig zur Erzeugung einer Sollbruchstelle verwendet werden. Alternativ dazu kann eine Drehbewegung der Antriebswelle mittels Reibung auf das Sollbruchstellenerzeugungselement übertragen werden. Gemäß einer Variante entkoppelt sich das Sollbruchstellenerzeugungselement bei einer Überlast selbsttätig von der Antriebswelle, sodass eine rotative Relativbewegung zwischen Sollbruchstellenerzeugungselement und Antriebswelle möglich ist. Alternativ dazu kann das Sollbruchstellenerzeugungselement im Gebrauch stets drehfest mit der Antriebswelle verbunden sein und zu keinem Zeitpunkt eine rotative Relativbewegung zwischen Sollbruchstellenerzeugungselement und Antriebswelle möglich sein.

Um ein seitliches Abfließen der Schmelze zu unterstützen, weist das Sollbruchstellenerzeugungselement vorteilhafterweise zumindest abschnittsweise eine schräge Ableitfläche auf. Vorzugsweise erstreckt sich die schräge Ableitfläche über die gesamte Stirnseite, d.h. von einer inneren Stirnkante zu einer äußeren Stirnkante.

Bei Versuchen hat sich herausgestellt, dass ein Winkel α, gemessen zwischen der schrägen Ableitfläche und der Antriebsachse, vorzugsweise in einem Bereich zwischen 10° und 60°, insbesondere zwischen 25° und 35°, liegt. Hierdurch kann die Schmelze besonders gut seitlich abfließen und es bildet sich ein gut zu entfernender Wulst.

Um ein Eindringen der Schmelze in einen Zwischenraum zwischen dem Sollbruchstellenerzeugungselement und der Antriebswelle zu begrenzen, ist es vorteilhaft, wenn ein Außendurchmesser der Antriebswelle zumindest in einem axialen Bereich im Wesentlichen dem entsprechenden Innendurchmesser des Sollbruchstellenerzeugungselements entspricht. Dabei ist zu beachten, dass der Außendurchmesser der Antriebswelle stets kleiner als der Innendurchmesser des Sollbruchstellenerzeugungselements gewählt werden sollte, damit eine Relativbewegung zwischen Antriebswelle und Sollbruchstellenerzeugungselement möglich bleibt.

Um Schmelze oder den durch die Sollbruchstelle von der restlichen Schmelze getrennten Wulst abzutragen, kann zumindest eine Räumnase vorgesehen sein.

Diese Räumnase ist vorzugsweise an dem Sollbruchstellenerzeugungselement angeordnet. Insbesondere kann die Räumnase auf der Ableitfläche, beispielsweise der schrägen Ableitfläche, angeordnet sein. Die Räumnase kann eine zweite Ableitfläche aufweisen, welche sich in einem Winkel zur Antriebsachse erstreckt, der größer als der Winkel α ist.

Die Erfindung betrifft ferner ein Verfahren zum Setzen eines Setzelements in einem Bauteil unter Erzeugung einer Reibschweißverbindung zwischen dem Setzelement und dem Bauteil, insbesondere mittels eines Werkzeugs gemäß einer der vorstehend oder nachfolgend beschriebenen Ausführungsformen, umfassend: Einbringen des Setzelementes in das Bauteil unter Erzeugung einer relativen Rotationsbewegung zwischen dem Setzelement und dem Bauteil und einer relativen axialen Vorschubbewegung zwischen dem Setzelement und dem Bauteil und Erzeugen einer Sollbruchstelle in einem Wulst, welcher beim Setzen des Setzelements um das Setzelement herum entsteht.

Vorzugsweise wird die Sollbruchstelle in Form einer Kerbe in der erstarrten Schmelze ausgeformt. Hierdurch wird die Schmelze lokal geschwächt, sodass ein Teil der Schmelze auf einfache Weise abgetrennt werden kann.

Vorteilhafterweise wird die Sollbruchstelle durch ein Eindrücken bzw. Eintauchen eines Sollbruchstellenerzeugungselements generiert. Insbesondere kann das Sollbruchstellenerzeugungselement in die flüssige bzw. teigige Schmelze des Wulsts eingedrückt werden.

Gemäß einer Ausführungsform wird die Sollbruchstelle als umlaufende Nut ausgebildet. In anderen Worten wird eine um die Antriebsachse bzw. eine Mittelachse des Setzelements umlaufende Nut gebildet. Die ringförmige Nut weist vorzugsweise einen Durchmesser auf, welcher größer als der größte Durchmesser des Setzelements ist.

Gemäß einer Ausführungsform kann die Nut so ausgeformt werden, dass diese eine Außenfläche und eine Innenfläche aufweist, welche in einem Winkel zueinander angeordnet sind. Vorzugsweise schneiden sich die Außenfläche und die Innenfläche, sodass die Nut einen v-förmigen Querschnitt aufweist. Hierzu kann ein im Querschnitt spitz zulaufendes Sollbruchstellenerzeugungselement verwendet werden. Das Sollbruchstellenerzeugungselement wird vorzugsweise in einen, dem Setzelement zugewandten, Randbereich des Wulstes hineingedrückt.

Vorteilhafterweise weist die Innenfläche einen kleineren Winkel zur Antriebsachse auf als die Außenfläche. Beispielsweise kann die Innenfläche einen Winkel zwischen 0° und 5°, insbesondere von im Wesentlichen 0°, zur Antriebsachse aufweisen. Die Außenfläche weist vorzugsweise einen Winkel zwischen 25° und 35° zur Antriebsachse auf.

Nachfolgend wird die Erfindung anhand einer rein beispielhaften Ausführungsform unter Bezugnahme auf die beigefügten Zeichnungen beschrieben. Es zeigen:
- Fig. 1: eine seitliche Schnittansicht eines erfindungsgemäßen Werkzeugs;
- Fig. 2A: eine Prinzipdarstellung des Werkzeugs von Fig. 1;
- Fig. 2B: eine Prinzipdarstellung eines zweiten erfindungsgemäßen Werkzeugs;
- Fig. 3A: einen ersten Teil eines Ablaufdiagramms eines erfindungsgemäßen Verfahrens;
- Fig. 3B: einen zweiten Teil des Ablaufdiagramms des erfindungsgemäßen Verfahrens von Fig. 3A;
- Fig. 4A: einen ersten Teil eines Ablaufdiagramms eines zweiten erfindungsgemäßen Verfahrens;
- Fig. 4B: einen zweiten Teil des Ablaufdiagramms des zweiten erfindungsgemäßen Verfahrens von Fig. 4A;
- Fig. 5A: eine Detailansicht eines ersten Teils eines Ablaufdiagramms eines erfindungsgemäßen Verfahrens;
- Fig. 5B: eine Detailansicht eines zweiten Teils des Ablaufdiagramms von Fig. 5A;
- Fig. 5C: eine Detailansicht eines dritten Teils des Ablaufdiagramms von Fig. 5A; und
- Fig. 5D: eine Detailansicht eines vierten Teils des Ablaufdiagramms von Fig. 5A.

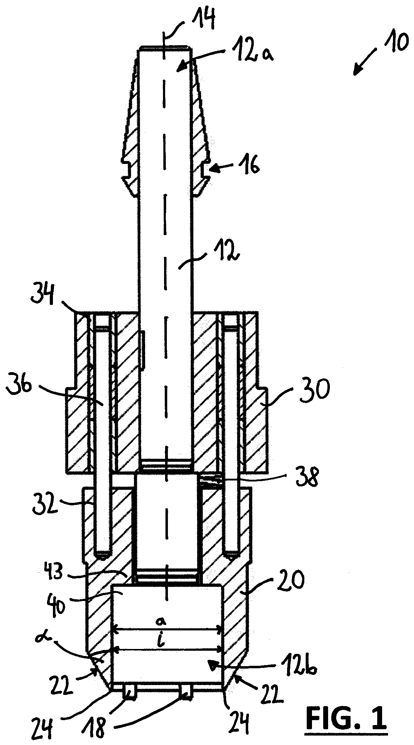

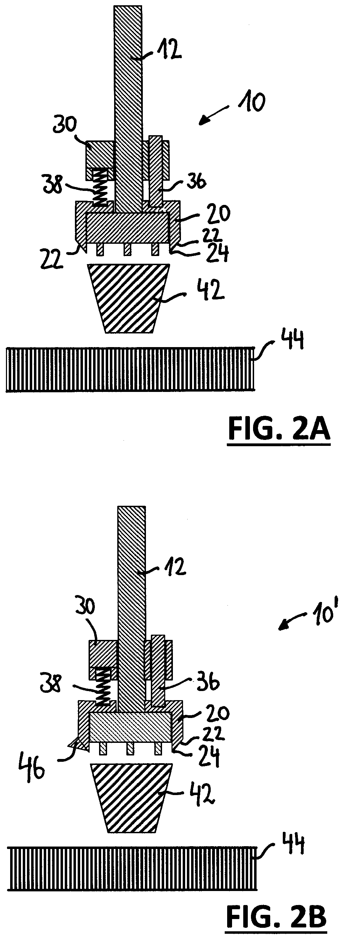

In Fig. 1 ist ein Werkzeug 10 zum Setzen eines Setzelements 42 (Fig. 2A) in einem Bauteil unter Erzeugung einer Reibschweißverbindung zwischen dem Setzelement 42 und dem Bauteil gezeigt. Das Werkzeug 10 umfasst eine Antriebswelle 12, welche sich entlang einer Antriebsachse 14 erstreckt und sich mittels eines nicht gezeigten Rotationsantriebs in Rotation um die Antriebsachse 14 versetzen lässt. Die Antriebswelle 12 weist ein erstes, proximales Ende 12a auf, welches dazu ausgebildet und eingerichtet ist, mit einer Spannvorrichtung einer Rotationsvorschubeinheit verbunden zu werden. Hierzu weist die Antriebswelle 12 Kopplungsmittel 16 zur formschlüssigen Kopplung mit nicht gezeigten Spannmitteln auf. An einem zweiten, distalen Ende 12b der Antriebswelle 12 sind Haltemittel 18 vorgesehen, um das Setzelement 42, beispielsweise einen Reibschweißdom, an der Antriebswelle 12 zu fixieren. Die Haltemittel 18 sind vorzugsweise, wie in Fig. 1 gezeigt, dezentral angeordnet, um mittels Formschluss ein Drehmoment auf das Setzelement 42 übertragen zu können.

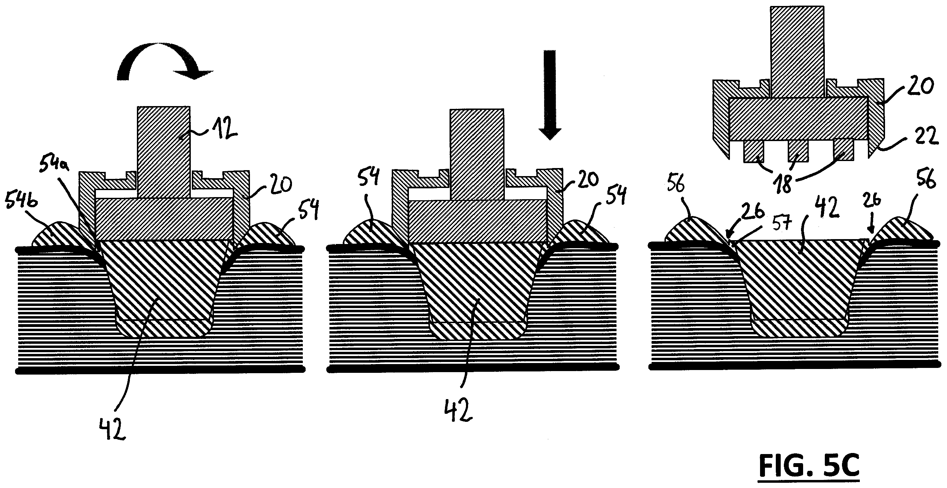

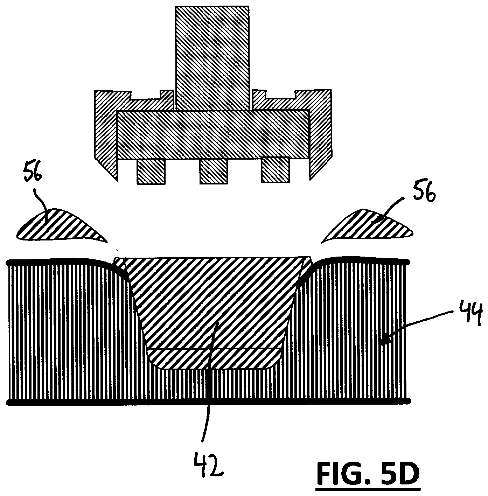

Die Antriebswelle 12 ist an ihrem distalen Endbereich 12b von einem Sollbruchstellenerzeugungselement 20 vollständig umgeben. Das Sollbruchstellenerzeugungselement 20 weist eine schräge Ableitfläche 22 auf, welche einen Winkel α von 30° mit der Antriebsachse einschließt und daher an ihrem Innenumfang eine spitze Kante 24 aufweist. Die Kante 24 ist dazu ausgebildet und eingerichtet, eine ringförmige Sollbruchstelle 26 (siehe Fig. 5C) in einem Wulst 56 zu erzeugen, welcher beim Setzen eines Setzelements 42 um das Setzelement 42 herum entsteht.

Wie ebenfalls in Fig. 1 zu sehen ist, weist das Werkzeug 10 zudem ein Drehmomentübertragungselement 30, hier in Form einer Hülse, auf, um ein Drehmoment von der Antriebswelle 12 auf das Sollbruchstellenerzeugungselement 20 zu übertragen. Hierzu ist das Drehmomentübertragungselement 30, beispielsweise mittels einer Presspassung, fest mit der Antriebswelle 12 verbunden. Zudem ist in dem Sollbruchstellenerzeugungselement 20 zumindest eine Bohrung 32 und in dem Drehmomentübertragungselement 30 zumindest eine Bohrung 34 vorgesehen. Die Bohrungen 32 und 34 sind konzentrisch zueinander ausgerichtet und dienen dazu, gemeinsam eine Stange 36 aufzunehmen. Über das Drehmomentübertragungselement 30 und die Stange 36 wird das an der Antriebswelle 12 anliegende Drehmoment auf das Sollbruchstellenerzeugungselement 20 übertragen, sodass sich die Antriebswelle 12 und das Sollbruchstellenerzeugungselement 20 gleichförmig um die Antriebsachse 14 drehen. Vorzugsweise sind, wie in Fig. 1 gezeigt, zumindest zwei Bohrungen 32, zwei Bohrungen 34 und zwei Stangen 36 vorgesehen, um eine sichere Drehmomentübertragung zu gewährleisten.

Damit sich das Sollbruchstellenerzeugungselement 20 in axialer Richtung relativ zu der Antriebswelle 12 bewegen kann, hat die zumindest eine Bohrung 34 einen breiteren Durchmesser als die zumindest eine Stange 36. Hierdurch lässt sich die zumindest eine Stange 36 in der zumindest einen Bohrung 34 verschieben. Die Stange 36 dient somit nicht nur zur Drehmomentübertragung, sondern zudem noch zur Führung einer axialen Relativbewegung zwischen dem Sollbruchstellenerzeugungselement 20 und der Antriebswelle 12.

Um das Sollbruchstellenerzeugungselement 20 in eine Ausgangsposition (siehe Fig. 1) vorzuspannen, ist ein Federelement 38 zwischen das Sollbruchstellenerzeugungselement 20 und das Drehmomentübertragungselement 30 geschaltet. Das Federelement 38, welches in der gezeigten Ausführungsform als Spiralfeder ausgebildet ist, ist durch eine Bewegung des Sollbruchstellenerzeugungselements 20 relativ zur Antriebswelle 12 auf das Drehmomentübertragungselement 30 zu spannbar. In anderen Worten erhöht sich eine Rückstellkraft des Federelements 38, wenn das Sollbruchstellenerzeugungselement 20 aus der Ausgangsposition in Richtung des ersten Endes 12a der Antriebswelle 12 bewegt wird.

Um das Sollbruchstellenerzeugungselement 20 auf einfache Weise verliersicher auf der Antriebswelle 12 anzuordnen, weist die Antriebswelle 12 eine Querschnittsvergrößerung 40 und das Sollbruchstellenerzeugungselement 20 eine korrespondierende Querschnittsverkleinerung 43 auf. Die Querschnittsvergrößerung 40 dient dazu, eine axiale Bewegung des Sollbruchstellenerzeugungselements 20 in Richtung des distalen Endes 12b zu limitieren.

Die Querschnittsvergrößerung 40 hat einen Außendurchmesser a, welcher im Wesentlichen einem Innendurchmesser i des Sollbruchstellenerzeugungselements 20 entspricht. Der Außendurchmesser a ist dabei nur geringfügig kleiner als der Innendurchmesser i, damit sich das Sollbruchstellenerzeugungselement 20 relativ zur Antriebsachse axial bewegen lässt.

In Fig. 2A ist eine Prinzipdarstellung des Werkzeugs 10 von Fig. 1 gezeigt. Das Werkzeug 10 ist dazu ausgebildet und eingerichtet, ein Setzelement 42 stirnseitig aufzunehmen, zu halten und in ein Bauteil 44 einzubringen.

In Fig. 2B ist eine Prinzipdarstellung eines Werkzeugs 10' gezeigt. Dieses Werkzeug 10' unterscheidet sich von dem in Fig. 1 und 2A gezeigten Werkzeug 10 lediglich dadurch, dass an der schrägen Ableitfläche 22 eine Räumnase 46 vorgesehen ist. Die Räumnase 46 ist in einem Teilbereich der Ableitfläche 22 angeordnet und dient dazu, Schmelze 54 oder einen mit einer Sollbruchstelle 26 versehenen Wulst 56 abzutragen.

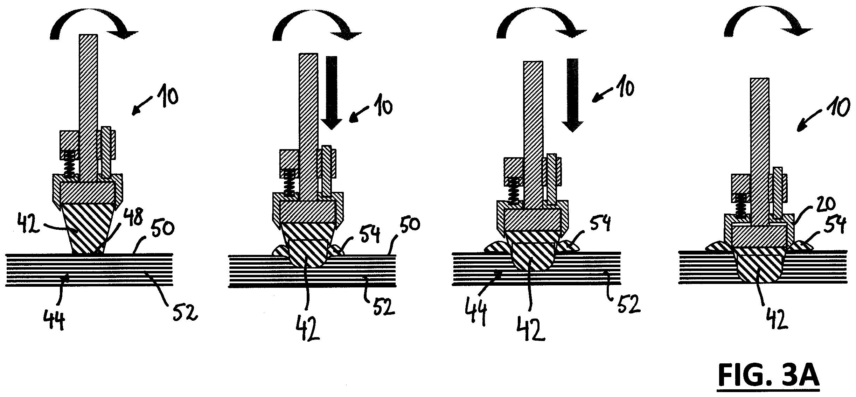

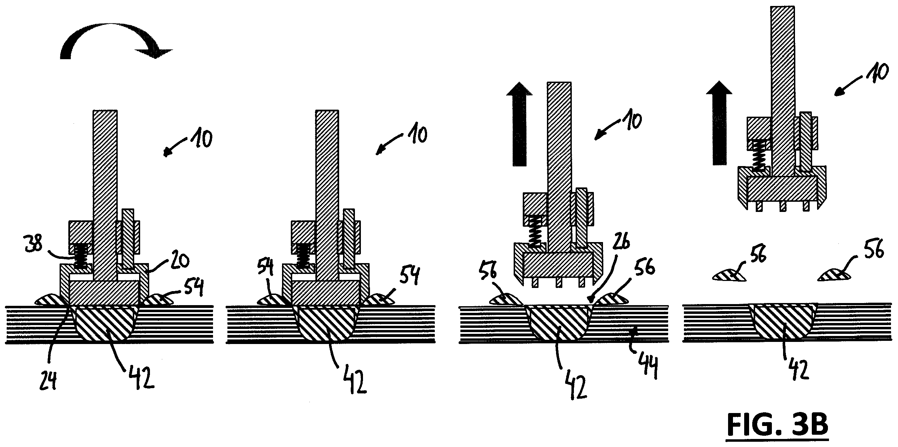

In den Figuren 3A und 3B ist ein Verfahrensablauf dargestellt, welcher zeigt, wie mit dem zuvor beschriebenen Werkzeug 10 ein Setzelement 42 in ein Bauteil 44 eingebracht und dabei eine Sollbruchstelle 26 in einem Wulst 56 erzeugt werden kann.

Im Bild links außen wird zunächst das Setzelement 42 mittels des Werkzeugs 10 rotiert und anschließend die von dem Werkzeug entfernte Stirnseite 48 des Setzelements 42 auf eine Deckschicht 50 des Bauteils 44 aufgesetzt. Hierdurch erwärmt sich die Deckschicht 50 des Bauteils 44 und wird weicher. Im Bild rechts daneben ist die Deckschicht 50 aufgeweicht, sodass das Setzelement 42 die Deckschicht 50 durchdringen kann. Die durch ein Aufschmelzen der Deckschicht 50 und eines Kerns 52 entstehende Schmelze 54 sammelt sich in einem ringförmigen Bereich, welcher das Setzelement 42 umgibt, an. Im Bild daneben ist zu sehen, dass sich durch ein immer tieferes Eindringen des Setzelements 42 in das Bauteil 44 eine immer größere Menge der Schmelze 54 in dem das Setzelement 42 umgebenden Bereich ansammelt.

Im rechten Bild von Fig. 3A ist zu sehen, dass ab einer bestimmten Eindringtiefe des Setzelements 42 bzw. einem bestimmten Tiefenwert des Werkzeugs vor einer Endposition des Setzelements 42 das Sollbruchstellenerzeugungselement 20 mit der wulstförmigen Schmelze 54 in Kontakt kommt. Dabei dreht sich das Werkzeug 10 weiterhin um die Antriebsachse 14.

Im linken Bild von Fig. 3B wird die Kante 24 des Sollbruchstellenerzeugungselements 20 durch eine weitere Vorschubbewegung des Werkzeugs 10 weiter in die Schmelze 54, genauer gesagt in einen radial inneren Bereich der Schmelze 54, eingedrückt. Dabei erzeugt die Kante 24 des Sollbruchstellenerzeugungselements 20 die ringförmig umlaufende Sollbruchstelle 26 (siehe Fig. 5C, rechts). Während des Eindrückens des Sollbruchstellenerzeugungselements 20 in die Schmelze 54 wird das Sollbruchstellenerzeugungselement 20 entgegen einer Rückstellkraft des Federelements 38 axial verschoben. Durch Einstellen einer entsprechenden Rückstellkraft des Federelements 38 kann sichergestellt werden, dass das Sollbruchstellenerzeugungselement 20 die Schmelze 54 nicht vollständig durchtrennt, sondern eine Verbindung erhalten bleibt.

Wenn das Setzelement 42 seine vorgesehene Endposition erreicht hat, werden die Vorschubbewegung und die Drehbewegung des Werkzeugs 10 gestoppt. Nach einer Abkühlphase wird das Werkzeug 10 entgegen der Vorschubrichtung zurückgezogen. Der mit dem Bauteil 44 über die Sollbruchstelle 26 verbundene, erkaltete Wulst 56 kann anschließend auf einfache Weise abgetragen werden.

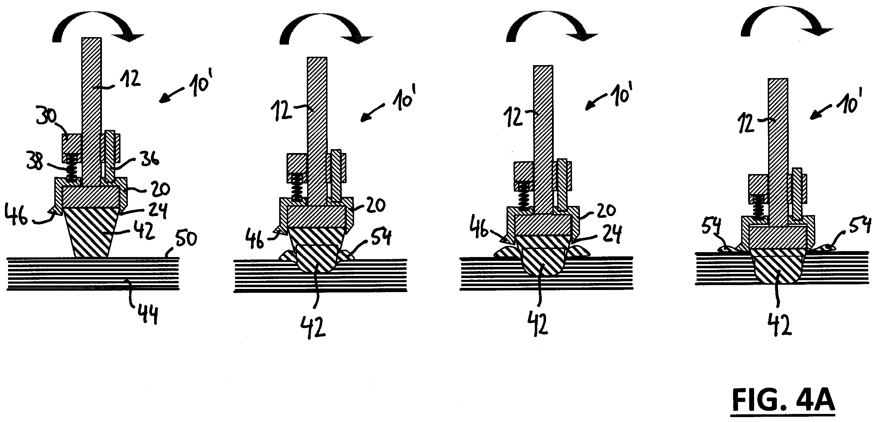

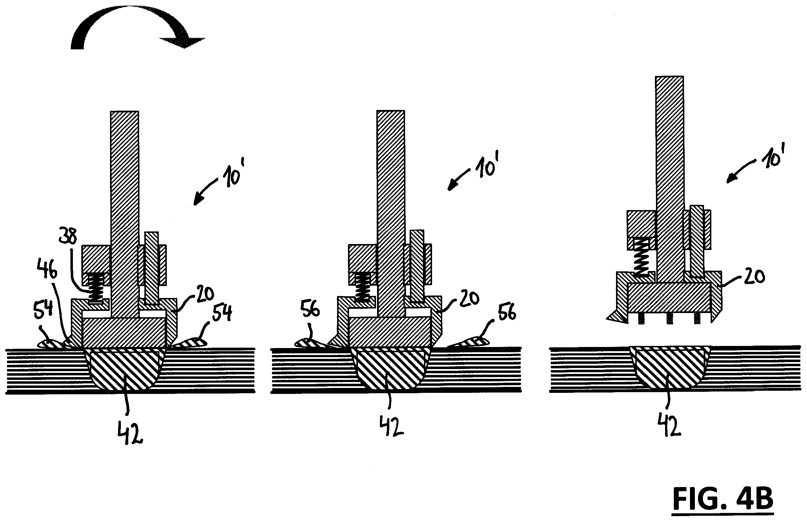

Die Figuren 4A und 4B zeigen einen entsprechenden Setzprozess mit dem Werkzeug 10' gemäß Fig. 2B. Mit dem Eintauchen der Kante 24 in die Schmelze (siehe rechtes Bild der Fig. 4A) kommt auch die Räumnase 46 mit der Schmelze 54 in Kontakt. Die Räumnase 46 verformt kontinuierlich einen Teil der Schmelze 54, sodass ein flacherer Wulst 56 entsteht.

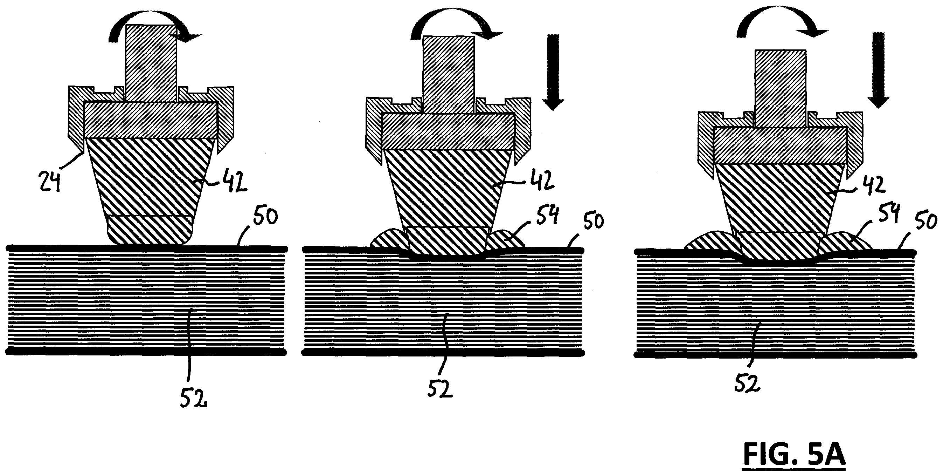

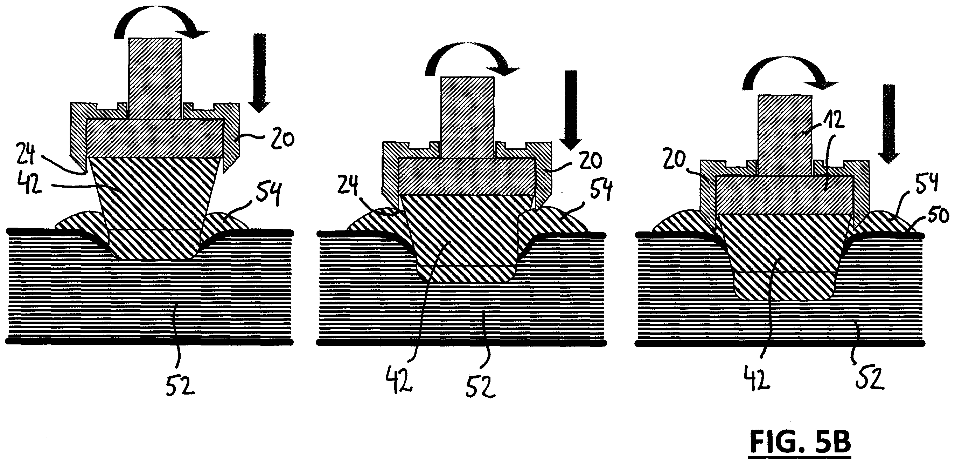

In den Fig. 5A bis 5D ist noch einmal detaillierter gezeigt, wie die Sollbruchstelle 26 beim Setzprozess mit dem Werkzeug 10 erzeugt wird. Durch ein Reiben des Setzelements 42 auf der Deckschicht 50 wird die Deckschicht 50 erwärmt. Hierdurch wird die Deckschicht 50 aufgeschmolzen und bildet einen Krater. Überschüssige Schmelze 54 wird nach außen gedrängt und lagert sich seitlich neben dem Setzelement 42 in einem nicht vom Werkzeug 10 umgebenen Bereich ab. In dem mittleren Bild von Fig. 5B taucht die Kante 24 des Sollbruchstellenerzeugungselements 20 in die Schmelze 54 ein. Durch eine weitere Vorschubbewegung taucht die Kante 24 des Sollbruchstellenerzeugungselements 20 weiter in die Schmelze 54 ein, sodass die gesamte schräge Ableitfläche 22 des Sollbruchstellenerzeugungselements 20 in die Schmelze 54 eintaucht. Dabei steigt ein von der Schmelze 54 auf das Sollbruchstellenerzeugungselement 20 wirkender Widerstand an, bis dieser eine Rückstellkraft des Federelements 38 überwindet. Im linken Bild von Fig. 5C ist zu sehen, dass sich das Sollbruchstellenerzeugungselement 20 relativ zur Antriebswelle 12 entgegen der Rückstellkraft des Federelements 38 in Richtung des proximalen Endes 12a der Antriebswelle 12 bewegt. Hierdurch wird ermöglicht, dass, wie im linken Bild von Fig. 5C zu sehen ist, ein Übergang zwischen der, das Setzelement 42 unmittelbar umgebenden, Schmelze 54a und der wulstförmigen Schmelze 54b erhalten bleibt. Dieser Übergang dient als Sollbruchstelle 26, um den Wulst 56 von der restlichen erstarrten Schmelze 57 abzulösen.

### Bezugszeichenliste

- 10: Werkzeug
- 12: Antriebswelle
- 14: Antriebsachse
- 16: Kopplungsmittel
- 18: Haltemittel
- 20: Sollbruchstellenerzeugungselement
- 22: Ableitfläche
- 24: Kante
- 26: Sollbruchstelle
- 30: Drehmomentübertragungselement
- 32: Bohrung
- 34: Bohrung
- 36: Stange
- 38: Federelement
- 40: Querschnittsvergrößerung
- 42: Setzelement
- 43: Querschnittsverkleinerung
- 44: Bauteil
- 46: Räumnase
- 48: Stirnseite (Setzelement)
- 50: Deckschicht
- 52: Kern
- 54: Schmelze
- 56: Wulst
- 57: restliche erstarrte Schmelze
- α: Winkel
- a: Außendurchmesser
- i: Innendurchmesser

## Patentansprüche

1. Werkzeug (10; 10') zum Setzen eines Setzelements (42) in einem Bauteil (44) unter Erzeugung einer Reibschweißverbindung zwischen dem Setzelement (42) und dem Bauteil (44), umfassend:
eine in Rotation um eine Antriebsachse (14) versetzbare Antriebswelle (12) zum Übertragen eines Drehmoments auf das Setzelement (42),
**gekennzeichnet durch**
ein sich zumindest abschnittsweise um die Antriebsachse (14) herum erstreckendes Sollbruchstellenerzeugungselement (20).

2. Werkzeug (10; 10') nach Anspruch 1,
**dadurch gekennzeichnet,**
**dass** eine Ableitfläche (22) des Sollbruchstellenerzeugungselements (20) zumindest abschnittsweise eine Kante (24) bildet, welche dazu ausgebildet ist, eine ringförmige Sollbruchstelle (26) in einem Wulst (56) zu erzeugen, welcher beim Setzen des Setzelements (42) um das Setzelement (42) herum entsteht.

3. Werkzeug (10; 10') nach Anspruch 1 oder 2,
**dadurch gekennzeichnet,**
**dass** das Sollbruchstellenerzeugungselement (20) axial beweglich an der Antriebswelle (12) angeordnet ist.

4. Werkzeug (10; 10') nach Anspruch 3,
**dadurch gekennzeichnet,**
**dass** das Sollbruchstellenerzeugungselement (20) entgegen einer Federkraft in Richtung eines proximalen Endes (12a) der Antriebswelle (12) beweglich ist.

5. Werkzeug (10; 10') nach Anspruch 4,
**dadurch gekennzeichnet,**
**dass** die Federkraft einstellbar ist.

6. Werkzeug (10; 10') nach einem der vorstehenden Ansprüche,
**dadurch gekennzeichnet,**
**dass** das Sollbruchstellenerzeugungselement (20) drehfest mit der Antriebswelle (12) gekoppelt ist.

7. Werkzeug (10; 10') nach einem der vorstehenden Ansprüche,
**dadurch gekennzeichnet,**
**dass** das Sollbruchstellenerzeugungselement (20) zumindest abschnittsweise eine schräge Ableitfläche (22) aufweist.

8. Werkzeug (10; 10') nach Anspruch 7,
**dadurch gekennzeichnet,**
**dass** ein Winkel α zwischen der schrägen Ableitfläche (22) und der Antriebsachse (14) in einem Bereich zwischen 10° und 60°, insbesondere in einem Bereich zwischen 25° und 35°, liegt.

9. Werkzeug (10; 10') nach einem der vorstehenden Ansprüche,
**dadurch gekennzeichnet,**
**dass** das Sollbruchstellenerzeugungselement (20) einen Innendurchmesser (i) aufweist, und die Antriebswelle (12) einen Außendurchmesser (a) aufweist, und dass der Außendurchmesser (a) der Antriebswelle (12) zumindest abschnittsweise im Wesentlichen dem Innendurchmesser (i) des Sollbruchstellenerzeugungselements (20) entspricht.

10. Werkzeug (10') nach einem der vorstehenden Ansprüche,
**dadurch gekennzeichnet,**
**dass** zumindest eine Räumnase (46) vorgesehen ist.

11. Werkzeug (10') nach Anspruch 10,
**dadurch gekennzeichnet,**
**dass** die Räumnase (46) an dem Sollbruchstellenerzeugungselement (20) angeordnet ist.

12. Verfahren zum Setzen eines Setzelements (42) in einem Bauteil (44) unter Erzeugung einer Reibschweißverbindung zwischen dem Setzelement (42) und dem Bauteil (44), insbesondere mittels eines Werkzeugs (10; 10') gemäß zumindest einem der vorherigen Ansprüche, umfassend:
Einbringen des Setzelementes (42) in das Bauteil (44) unter Erzeugung einer relativen Rotationsbewegung zwischen dem Setzelement (42) und dem Bauteil (44) und einer relativen axialen Vorschubbewegung zwischen dem Setzelement (42) und dem Bauteil (44);
**gekennzeichnet durch**
Erzeugen einer Sollbruchstelle (26) in einem Wulst (56), welcher beim Setzen des Setzelements (42) um das Setzelement (42) herum entsteht.

13. Verfahren nach Anspruch 12,
**dadurch gekennzeichnet,**
**dass** die Sollbruchstelle als umlaufende Nut (26) ausgebildet ist.

14. Verfahren nach Anspruch 13,
**dadurch gekennzeichnet,**
**dass** die Nut (26) einen v-förmigen Querschnitt aufweist.

15. Verfahren nach Anspruch 12 oder 13
**dadurch gekennzeichnet,**
**dass** die Nut (26) eine Außenfläche und eine Innenfläche aufweist, und dass die Innenfläche einen kleineren Winkel zur Antriebsachse (14) aufweist als die Außenfläche.

## Claims

1. A tool (10; 10') for setting a setting element (42) in a component (44) while producing a friction welding connection between the setting element (42) and the component (44), said tool (10; 10') comprising:
a drive shaft (12) which can be set into rotation about a drive axis (14) for transmitting a torque to the setting element (42),
**characterized by**
a predetermined breaking point generating element (20) extending at least sectionally around the drive axis (14).

2. A tool (10; 10') according to claim 1,
**characterized in that**
a discharge surface (22) of the predetermined breaking point generating element (20) at least sectionally forms an edge (24) which is configured to generate an annular predetermined breaking point (26) in a bead (56) which is produced around the setting element (42) when setting the setting element (42).

3. A tool (10; 10') according to claim 1 or 2,
**characterized in that**
the predetermined breaking point generating element (20) is axially movably arranged at the drive shaft (12).

4. A tool (10; 10') according to claim 3,
**characterized in that**
the predetermined breaking point generating element (20) is movable against a spring force in the direction of a proximal end (12a) of the drive shaft (12).

5. A tool (10; 10') according to claim 4,
**characterized in that**
the spring force is settable.

6. A tool (10; 10') according to any of the preceding claims,
**characterized in that**
the predetermined breaking point generating element (20) is rotationally fixedly coupled to the drive shaft (12).

7. A tool (10; 10') according to any of the preceding claims,
**characterized in that**
the predetermined breaking point generating element (20) at least sectionally has a slanted discharge surface (22).

8. A tool (10; 10') according to claim 7,
**characterized in that**
an angle α between the slanted discharge surface (22) and the drive axis (14) lies in a range between 10° and 60°, in particular in a range between 25° and 35°.

9. A tool (10; 10') according to any of the preceding claims,
**characterized in that**
the predetermined breaking point generating element (20) has an inner diameter (i) and the drive shaft (12) has an external diameter (a), and **in that** the external diameter (a) of the drive shaft (12) at least sectionally substantially corresponds to the inner diameter (i) of the predetermined breaking point generating element (20).

10. A tool (10') according to any one of the preceding claims,
**characterized in that**
at least one clearing nose (46) is provided.

11. A tool (10') according to claim 10,
**characterized in that**
the clearing nose (46) is arranged at the predetermined breaking point generating element (20).

12. A method for setting a setting element (42) in a component (44) while producing a friction welding connection between the setting element (42) and the component (44), in particular by means of a tool (10; 10') according to at least one of the preceding claims, comprising:
inserting the setting element (42) into the component (44) while generating a relative rotational movement between the setting element (42) and the component (44) and a relative axial feed movement between the setting element (42) and the component (44),
**characterized by**
generating a predetermined breaking point (26) in a bead (56) which is produced around the setting element (42) when setting the setting element (42).

13. A method according to claim 12,
**characterized in that**
the predetermined breaking point is formed as a peripheral groove (26).

14. A method according to claim 13,
**characterized in that**
the groove (26) has a V-shaped cross-section.

15. A method according to claim 12 or 13,
**characterized in that**
the groove (26) has an outer surface and an inner surface, and
**in that** the inner surface has a smaller angle with respect to the drive axis (14) than the outer surface.

## Revendications

1. Outil (10 ; 10') pour poser un élément à poser (42) dans une pièce (44) en créant une liaison par soudage par friction entre l'élément à poser (42) et la pièce (44), comprenant :
un arbre d'entraînement (12) pouvant être mis en rotation autour d'un axe d'entraînement (14) pour transmettre un couple de rotation à l'élément à poser (42),
**caractérisé par**
un élément (20) de génération d'un emplacement destiné à la rupture, ledit élément s'étendant au moins localement autour de l'axe d'entraînement (14).

2. Outil (10 ; 10') selon la revendication 1,
**caractérisé en ce que**
une surface d'évacuation (22) de l'élément (20) de génération d'un emplacement destiné à la rupture constitue au moins localement une arête (24) qui est conçue pour générer un emplacement destiné à la rupture (26) annulaire dans un bourrelet (56) qui se forme autour de l'élément à poser (42) lors de la pose de l'élément à poser (42).

3. Outil (10 ; 10') selon la revendication 1 ou 2,
**caractérisé en ce que**
l'élément (20) de génération d'un emplacement destiné à la rupture est disposé de manière mobile axialement sur l'arbre d'entraînement (12).

4. Outil (10 ; 10') selon la revendication 3,
**caractérisé en ce que**
l'élément (20) de génération d'un emplacement destiné à la rupture est mobile à l'encontre d'une force élastique en direction d'une extrémité proximale (12a) de l'arbre d'entraînement (12).

5. Outil (10 ; 10') selon la revendication 4,
**caractérisé en ce que**
la force élastique est réglable.

6. Outil (10 ; 10') selon l'une des revendications précédentes,
**caractérisé en ce que**
l'élément (20) de génération d'un emplacement destiné à la rupture est couplé solidairement en rotation à l'arbre d'entraînement (12).

7. Outil (10 ; 10') selon l'une des revendications précédentes,
**caractérisé en ce que**
l'élément (20) de génération d'un emplacement destiné à la rupture présente au moins localement une surface d'évacuation oblique (22).

8. Outil (10 ; 10') selon la revendication 7,
**caractérisé en ce que**
un angle α entre la surface d'évacuation oblique (22) et l'axe d'entraînement (14) se situe dans une plage comprise entre 10° et 60°, en particulier dans une plage comprise entre 25° et 35°.

9. Outil (10 ; 10') selon l'une des revendications précédentes,
**caractérisé en ce que**
l'élément (20) de génération d'un emplacement destiné à la rupture présente un diamètre intérieur (i), et l'arbre d'entraînement (12) présente un diamètre extérieur (a), et
**en ce que** le diamètre extérieur (a) de l'arbre d'entraînement (12) correspond sensiblement, au moins localement, au diamètre intérieur (i) de l'élément (20) de génération d'un emplacement destiné à la rupture.

10. Outil (10') selon l'une des revendications précédentes,
**caractérisé en ce que**
il est prévu au moins un nez de brochage (46).

11. Outil (10') selon la revendication 10,
**caractérisé en ce que**
le nez de brochage (46) est disposé sur l'élément (20) de génération d'un emplacement destiné à la rupture.

12. Procédé pour poser un élément à poser (42) dans une pièce (44) en créant une liaison par soudage par friction entre l'élément à poser (42) et la pièce (44), en particulier au moyen d'un outil (10 ; 10') selon l'une au moins des revendications précédentes, consistant à :
introduire l'élément à poser (42) dans la pièce (44) en générant un mouvement de rotation relatif entre l'élément à poser (42) et la pièce (44) et un mouvement d'avance axial relatif entre l'élément à poser (42) et la pièce (44),
**caractérisé par**
la création d'un emplacement destiné à la rupture (26) dans un bourrelet (56) qui se forme autour de l'élément à poser (42) lors de la pose de l'élément à poser (42).

13. Procédé selon la revendication 12,
**caractérisé en ce que**
l'emplacement destiné à la rupture est réalisé sous la forme d'une rainure périphérique (26).

14. Procédé selon la revendication 13,
**caractérisé en ce que**
la rainure (26) présente une section transversale en forme de V.

15. Procédé selon la revendication 12 ou 13,
**caractérisé en ce que**
la rainure (26) présente une surface extérieure et une surface intérieure, et **en ce que** la surface intérieure présente un angle plus petit par rapport à l'axe d'entraînement (14) que la surface extérieure.
